# EUROPEAN PATENT APPLICATION

(11) **EP 2 605 128 A1**
(43) Date of publication of application: **19.06.2013**
(21) Application number: 12007772.2
(22) Date of filing: 16.11.2012
(51) Int. Cl.: G06F 9/44

(54) **Publishing mobile applications**

(30) Priority: 15.12.2011 US 201113327336
(71) Applicant: SAP AG, 69190 Walldorf (DE)
(72) Inventor: Sabarish, T. S., 69190 Walldorf (DE)
(74) Representative: Müller-Boré & Partner Patentanwälte

(57) **Abstract**

Systems, methods and techniques relating to publishing mobile applications are described. A described technique includes instantiating an application for one or more mobile devices, associating one or more templates with the instantiated application, where each of the one or more templates configurable to provide a functionality to the application, mapping data from a backend system to each of the associated one or more templates, and publishing the application to the one or more mobile devices.

## Description

### TECHNICAL FIELD

The present disclosure relates to publishing mobile applications.

### BACKGROUND

Application software, also known as "application" or "app," is designed to help software users to perform a variety of tasks. Example application software may include enterprise software, accounting software, office suites, graphics-related software, and media players. Some applications may be developed to create, edit, or manage documents. In some cases, application software may be bundled with a computer and its system software. In some other cases, application software may be published separately. Application software may be designed for a particular computing platform or system software for a particular purpose. Some applications (e.g., Microsoft Office®) are available with versions for several different operating system platforms. Some other applications may have narrower requirements and are thus called, for example, a Geography application for Windows or an Android application for education or Linux gaming. Application software developed for mobile devices may sometimes be called mobile applications. Example mobile devices may include personal digital assistants, enterprise digital assistants, or mobile phones. Mobile applications may be pre-installed on mobile devices during manufacture, or downloaded by mobile device users from various mobile software distribution platforms. Example mobile software distribution platforms may include Android™, iOS, BlackBerry®, HP webOS, Symbian OS, and WINDOWS MOBILE®.

### SUMMARY

This disclosure provides various implementations of systems, computer program products, and methods for publishing mobile applications. An application is instantiated for one or more mobile devices. One or more templates are associated with the instantiated application, each of the one or more templates configurable to provide a functionality to the application. Data is mapped from a backend system to each of the associated one or more templates, and the application is published to the one or more mobile devices.

While generally described as computer program product that processes and transforms the respective data, some or all of the aspects may be computer-implemented methods or further included in respective systems or other devices for performing this described functionality. The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

FIGURE 1 is a schematic representation of an example system environment for publishing mobile applications.

FIGURE 2 is a block diagram showing an example process for publishing an mobile application based on a mobile business application publishing platform.

FIGURE 3 is a block diagram showing an example process for using template for publishing mobile applications on a mobile device.

FIGURE 4 is a flowchart showing an example process for setting up a notification/alert template.

FIGURE 5 is a flowchart showing an example process for publishing mobile applications.

Like reference symbols in the various drawings indicate like elements.

### DETAILED DESCRIPTION

This disclosure provides details and examples of publishing mobile applications. In some aspects, enterprise resource planning (ERP) vendors may allow creation of mobile applications and their publication using a mobile business application publishing platform (MBAPP). The MBAPP may act as an interface between the ERP vendors, ERP customers and end-users of the mobile applications. In some instances, the MBAPP can be a hosted solution provided by the ERP vendors to which the ERP customers can subscribe, in order to create mobile applications for their end-users/customers. In some instances, the MBAPP can be a part of the ERP instance provided by the ERP vendors which the ERP customers can use in order to create and publish mobile applications for their end-users and/or customers. To publish a mobile application, an ERP customer may first choose an existing template based on its specific implementation. The template may be, e.g., in a format of Extensible Markup Language (XML), including static data content that the mobile application can understand. The ERP customer can create and support a mobile application by populating the template with corresponding dynamic data content from the ERP backend based on mapping of one or more web services. The created mobile application may then be published by the ERP customer to their end-users.

The MBAPP provides an environment for easily creating and publishing mobile applications, where the consumption of the mobile applications by the end-users is standardized. In some instances, the ERP vendor can create a unified mobile application that any of its customer's end-users can download and subscribe. Where the ERP vendor creates a unified application that those respective end-users can download, the ERP customer is no longer forced to create separate mobile applications for its end-users, and can instead use the platform of MBAPP provided by the ERP vendor to map data from the ERP instance to the unified mobile application based on templates. The end-user can subscribe to the appropriate applications published by the ERP customers by connecting via the MBAPP server. Instead of developing mobile applications that adapt to different mobile operating systems, each having different user interfaces and/or data rendering formats, the ERP customer can create and publish mobile applications based on mapping data resources from ERP backend to one or more standard templates that can be consumed by a variety of mobile operating systems (e.g., iOS, Android™, or Symbian).

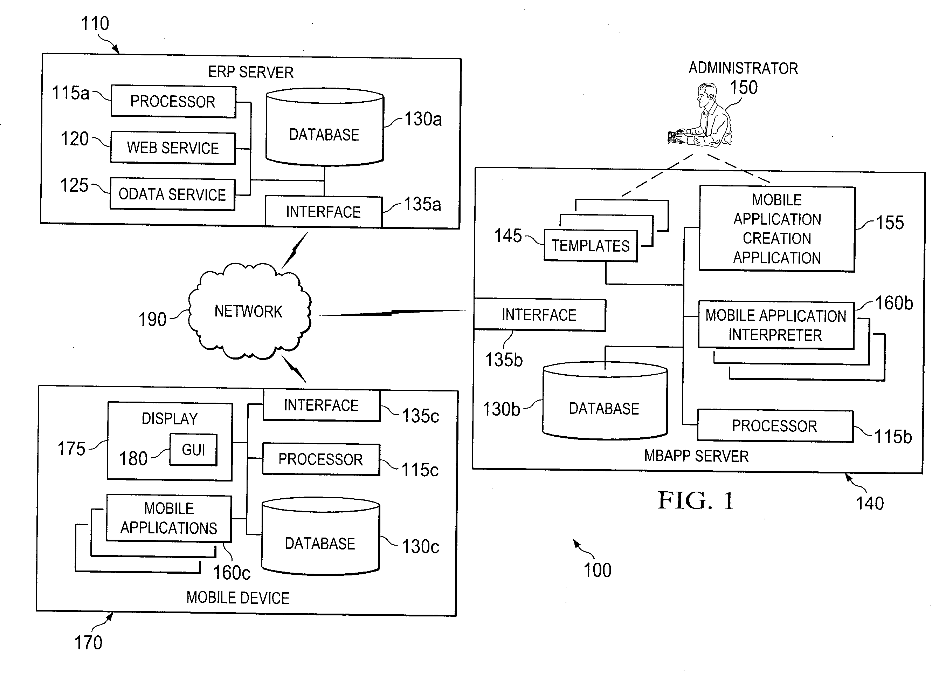

FIGURE 1 is a schematic representation of an example system environment 100 for publishing mobile applications. At a high level, the example system environment 100 includes, or is communicably coupled with, an ERP server 110 (or ERP system), an MBAPP server 140, an administrator 150, and a mobile device 170, at least some of which communicate across a network 190.

In the example environment 100 illustrated in FIGURE 1, the ERP server 110 can include hardware and/or software components including a processor 115a, one or more web services 120, an open data protocol (OData) service 125, a database 130a and an interface 135a. In general, the ERP server 110 may be a system that can perform functions including integrating internal and external management information across an organization, providing finance/accounting, manufacturing, sales and service, and customer relationship management functionality, among others. In some cases, ERP systems can automate their activity with an integrated software application. The ERP system software application may be used to facilitate the flow of information between business functions inside the boundaries of the organization and manage the connections to outside systems. The ERP server 110 can run on a variety of hardware and network configurations. The ERP server 110 may employ a database 130a as a repository for information.

At a high level, a server (e.g., ERP server 110) includes an electronic computing device operable to receive, transmit, process, store, or manage data and information associated with the environment 100. Specifically, the server 110 illustrated in FIGURE 1 may be responsible for receiving requests from one or more templates and/or applications associated with one or more external customers, vendors, or administrators communicably coupled to or operating in the example environment 100. The server 110 may also be responsible for responding to the received requests by processing said requests in the associated hosted applications (not shown) or web services 120, and sending the appropriate response back to the requesting entity. In addition to requests from the external customers, vendors or administrators, requests may also be sent from internal users, or third-party customers, other automated applications, as well as any other appropriate entities, individuals, systems, or computers. As used in the present disclosure, the term "computer" is intended to encompass any suitable processing device. Although FIGURE 1 illustrates a single ERP server 110, an ERP system can be implemented using two or more servers, as well as computers other than servers, including a server pool. Indeed, server 110 may be any computer or processing device such as, for example, a blade server, general-purpose personal computer (PC), Macintosh®, workstation, UNIX-based workstation, or any other suitable device. In other words, the present disclosure contemplates computers other than general purpose computers, as well as computers without conventional operating systems. Further, the server 110 may be adapted to execute any operating system, including Linux, UNIX, Windows, Mac OS®, or another suitable operating system.

The processor 115 shown in the example environment 100 can execute one or more hosted applications or client applications to provide web services 120 and OData services 125. For example, an ERP application (not shown) may be either a hosted application or a client application. Generally, the ERP application can perform at least one ERP related function. Example ERP related functions may include finance/accounting, manufacturing, sales and service, customer relationship management. In some instances, the processor 115 may perform the ERP related functions based on executing a web service 120, in order to facilitate the flow of information between business functions inside the boundaries of an organization, and manage the connections to outside parties.

Although illustrated as a single processor 115a included in the server 110, two or more processors may be used according to particular needs, desires, or particular implementations of the environment. Each processor 115 may be a central processing unit (CPU), a blade, an application specific integrated circuit (ASIC), a field-programmable gate array (FPGA), or another suitable component. Generally, the processor 115 executes instructions and manipulates data to perform the operations of the ERP server and, specifically, the one or more business applications 120. The processor 115 also executes the functionality required to receive and respond to requests from business customers, and/or their respective client applications, as well as the functionality required to perform the other operations of business system 110. Regardless of the particular implementation, "software" may include computer-readable instructions, firmware, wired or programmed hardware, or any combination thereof on a tangible and non-transitory medium operable when executed to perform at least the processes and operations described herein. Indeed, each software component may be fully or partially written or described in any appropriate computer language including C, C++, Java™, Visual Basic, assembler, Perl®, any suitable version of 4GL, as well as others. It will be understood that while portions of the software illustrated in FIGURE 1 are shown as individual modules that implement the various features and functionality through various objects, methods, or other processes, the software may instead include a number of sub-modules, third-party services, components, libraries, and such, as appropriate. Conversely, the features and functionality of various components can be combined into single components as appropriate. Aspects of the processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors 115 suitable for the execution of a computer program include, by way of example, both general and special purpose microprocessors, and any one or more processors of any kind of digital computer. Generally, a processor 115 will receive instructions and data from a read only memory or a random access memory or both. The essential elements of a computer are a processor 115 for performing actions in accordance with instructions and one or more memory devices for storing instructions and data. Generally, a computer will also include, or be operatively coupled to receive, data from or transfer data to, or both, one or more mass storage devices for storing data, e.g., magnetic, magneto optical disks, or optical disks. However, a computer need not have such devices. Devices suitable for storing computer program instructions and data include all forms of non-volatile memory, media and memory devices, including by way of example, semiconductor memory devices, e.g., EPROM, EEPROM, and flash memory devices; magnetic disks, e.g., internal hard disks or removable disks; magneto optical disks; CD-ROM and DVD-ROM disks. The processor 115 and the database (or memory) 130a can be supplemented by, or incorporated in, special purpose logic circuitry.

The ERP server 110 may store at least one more web service 120, where at least a portion of the web service 120 is executed via requests sent by and responses sent to an administrator 150 through the MBAPP server 140, or mobile devices 170 within and communicably coupled to the illustrated environment 100 of FIGURE 1. The web service 120 can be a hosted application on the ERP server 110. In some instances, the ERP server 110 may store a plurality of different web services 120 (or instances thereof) or the ERP application, while in other instances, the ERP server 110 may be a dedicated server meant to store and execute only a single web service 120 or ERP application. In some instances, the server 120 may comprise a web server, where the web services 120 and/or ERP application represent one or more web-based applications accessed and executed via network 190 by the mobile device(s) 170 of the system 110 to perform the programmed tasks or operations of the web service 120.

One or more web services 120 can be stored in database 130a and executed by processor 115a. At a high level, the web service 120 may be any application, program, module, process, or other software that may execute, change, delete, generate, transmit, or otherwise manage information according to the present disclosure, particularly in response to and in connection with one or more requests received from the illustrated MBAPP server 140 and its associated templates 145 and/or applications 155, 160c. In certain cases, only one web service 120 may be located at a particular server 110. In others, a plurality of related and/or unrelated web services 120 may be stored at a single server 110, or located across a plurality of other servers (not shown), as well. In certain cases, environment 100 may implement a composite web service 120 or a composite ERP application. For example, portions of the composite ERP application may be implemented as Enterprise Java Beans® (EJBs) or design-time components may have the ability to generate run-time implementations into different platforms, such as J2EE® (Java 2 Platform, Enterprise Edition), ABAP (Advanced Business Application Programming) objects, or Microsoft's® .NET, among others. Additionally, the ERP application and the associated web service(s) 120 may represent web-based applications accessed and executed by mobile devices 170, MBAPP server 140, templates 145 or applications 155, 160c via the network 190 (e.g., through the Internet). Further, while illustrated as internal to the ERP server 110, one or more processes associated with a particular ERP application and/or web service 120 may be stored, referenced, or executed remotely. For example, a portion of a particular ERP application and/or web service 120 may be a web service associated with the template 145 that is remotely called, while another portion of the ERP application and/or web service 120 may be an interface object or agent bundled for processing at a remote mobile device 170 or the MBAPP server 140.

The ERP server 110 may host one or more OData services 125. In general, Odata is a Web protocol for querying and updating data that can provide a way to unlock data and free the data from silos that exist in applications. These results can be achieved by Odata services based on applying and building upon Web technologies such as Hypertext Transfer Protocol (HTTP), Atom Publishing Protocol (AtomPub), and JavaScript® Object Notation (JSON) to provide access to information from a variety of applications, services, and stores. OData service 125 may be used to expose and access information from a variety of sources including, but not limited to, relational databases, file systems, content management systems and traditional web sites.

The server 110 further includes a database 130a. In general, database 130 may include any memory or database module and may take the form of volatile or non-volatile memory including, without limitation, magnetic media, optical media, random access memory (RAM), read-only memory (ROM), removable media, or any other suitable local or remote memory component. Database 130 may store various objects or data, including classes, frameworks, applications, backup data, business objects, jobs, web pages, web page templates, database tables, repositories storing business and/or dynamic information, and any other appropriate information including any parameters, variables, algorithms, instructions, rules, constraints, or references thereto associated with the purposes of the server 110 and the one or more services 120, 125 it provides. Additionally, database 130 may include any other appropriate data, such as VPN applications, firmware logs and policies, firewall policies, a security or access log, print or other reporting files, as well as others.

As shown in FIGURE 1, the server 110 also includes an interface 135a. In general, the interface 135 is used for communicating with other systems in the illustrated example environment 100 through the network 190. The interface 135 includes logic encoded in software and/or hardware in a suitable combination and operable to communicate with the network 190. More specifically, the interface 135 may comprise software supporting one or more communication protocols associated with communications such that the network 190 or interface's hardware is operable to communicate physical signals within and outside of the illustrated environment 100. In some instances, the interface's hardware may include wireless transceivers and antennas (not shown). The wireless transceivers can include both the transmitter circuitry and the receiver circuitry. The wireless transceivers may be responsible for up-converting a baseband signal to a passband signal or vice versa. The components of wireless transceivers may include a digital-to-analog converter/analog-to-digital converter, amplifier, frequency filter, and oscillator. The antenna is a transducer which can transmit and/or receive electromagnetic waves. The antenna can convert electromagnetic radiation into electric current, or vice versa. The antenna is generally responsible for the transmission and reception of radio waves, and can serve as the interface between the transceiver and the wireless channel.

It will be understood that besides the ERP server 110, an ERP system 110 may include other components that are suitable for any implementation without departing from the scope of the disclosure. In the present disclosure, the terms "ERP server" and "ERP system" are used interchangeably for illustration purposes.

The ERP server 110 is communicably coupled to an MBAPP server 140, a mobile device 170 and/or other entities through a network 190. Generally, the network 190 facilitates wireless or wireline communications between the devices operated in the environment 100, as well as with any other local or remote devices communicably coupled to the network 190 but not illustrated in FIGURE 1. The network 190 is illustrated as a single network in FIGURE 1, but may be a continuous or discontinuous network without departing from the scope of this disclosure, so long as at least a portion of the network may facilitate communications between senders and recipients.

The network 190 may be all or a portion of an enterprise or secured network, while in another instance, at least a portion of the network 190 may represent a connection to the Internet. In some instances, a portion of the network 190 may be a virtual private network (VPN), such as, for example, the connection between the ERP server 110 and the MBAPP server 140. Further, all or a portion of the network 190 can comprise either a wireline or wireless link. Example wireless links may include 802.11a/b/g/n, 802.20, WiMAX®, Bluetooth® and/or any other appropriate wireless link. In other words, the network 190 encompasses any internal or external network, networks, sub-network, or combination thereof operable to facilitate communications between various computing components inside and outside the illustrated environment. The network 190 may communicate, for example, Internet Protocol (IP) packets, Frame Relay frames, Asynchronous Transfer Mode (ATM) cells, voice, video, data, and other suitable information between network addresses. The network 190 may also include one or more local area networks (LANs), radio access networks (RANs), metropolitan area networks (MANs), wide area networks (WANs), all or a portion of the Internet, and/or any other communication system or systems at one or more locations.

In the illustrated example environment 100, the MBAPP server 140 includes a processor 115b, a database 130b, an interface 135b, one or more templates 145, a mobile application creation application 155, and one or more mobile application interpreters 160b. In some implementations, the software and hardware components (e.g., the processor 115b, database 130b and interface 135b) included in the MBAPP server 140 may have functionalities that are similar or different in nature to that of their respective counterparts included in the ERP server 110.

The MBAPP server 140 may be a hosted site provided by the ERP vendor that can allow ERP customers, vendors or administrators 150 to create mobile applications and publish them to their end-user and/or customers (e.g., the mobile device 170). The MBAPP server 140 may be placed so that ERP customers (or administrators 150) can create a custom mobile application using mobile application creation application 155. Example operations for creating a custom mobile application may include one or more of the following: 1) select a template 145 (e.g., RSS feed template, query result template, etc.) for inclusion in the custom mobile application; 2) map data stored in the database 130a of the ERP server 110, based on the web service 120 and/or OData service 125, to the template 145; and 3) publish the template 145 as a mobile application to mobile application interpreter 160b.

The MBAPP server 140 can act as an interface between the mobile application end-user (e.g., the mobile device 170) and the administrator 150 or equivalently, the ERP software customer. The end-users can download the mobile applications to the mobile device 170 (e.g., iPhone or Android™ phone) and store it locally as mobile applications 160c in the database 130c. The end-user can further use the mobile device 170 to access to ERP data stored in the ERP server 110 that is published by the administrator 150 as mobile applications 160c.

The administrator 150 may be a person or an electronic device that facilitates or manage the mobile application publication process. The administrator 150 may be an administrator of an ERP customer, an ERP vendor or a third-party software developer that can use the mobile application creation application 155 to publish mobile application based on templates 145. The administrator 150 can select a set of templates that decides on the behavior of a mobile application 160c when creating the mobile application 160c. The administrator 150 may also be responsible for mapping the template 145 to data sets stored in the database 130a of the ERP system 110, such that the corresponding data sets may be used to populate the template in order to publish the mobile applications 160c.

The MBAPP server 140 includes one or more templates 145. A template 145 may be provided in an Extensible Markup Language (XML) format that the mobile application interpreter 160b can understand and use to populate the application specific user interface with data content from the ERP system 110. The one or more templates may be used by an administrator 150 to publish information onto mobile applications 160c. Example templates may include a HyperText Markup Language (HTML) page with mapped fields from ERP web service 120 and/or ERP application, a notification/alerts page that can be populated by a web service based on events that arise in the ERP system 110, and a Query Result Page that can allow defining of different queries which executes mapped web service queries in the ERP system 110 based on input from the mobile device 170.

The example templates described above may include static content of one or more software applications. In some implementations, an application may be created by the administrator 150 based on static content included in a HTML template 145, with some portions of dynamic content included from the ERP system based on mapping the web service 120 or the OData service 125 to the services provided by the template 145.

An example scenario of using templates that include an HTML page with mapped fields from an ERP web service is described as follows: ABC Inc. (ABC) is a company that provides the most updated sales figures of its newly launched product "NewVenn." "NewVenn" is a product that can be enhanced by ABC's partner network via accessories almost every other day. ABC would like to motivate its existing customers to purchase "NewVenn" and talk about its features and accessories when they are added by ABC's suppliers/partners. Administrators at ABC can choose the appropriate template, map the fields and create a mobile application and publish it in the MBAPP server. The product information page can be built out of an HTML page template to publish static information about "NewVenn," and later map dynamic content from the ERP database for sales figures and feature additions. End-users of ABC can download the standard mobile application published by ERP vendor from the appropriate app marketplace based on the mobile phone OS, and later register that application to the MBAPP server as a customer of ABC. When the end-user accesses the mobile application, the service will contact the MBAPP server when they launch the mobile application. The MBAPP server can later on pick data from ABC's ERP and push content onto the mobile application. The end-users can directly place orders for "NewVenn" or its accessories from the mobile applications.

The notifications or alerts template may be associated with some events that occurred in the ERP system, or some components in the production side of a company that is significantly being used in large numbers. Notifications or alert templates may be identified at the ERP system and published or sent to the mobile device 170 when these events occurred. In such cases, the ERP data are pushed to the mobile device 170 from the ERP data backend (e.g., the ERP server 110).

An example scenario of using templates that includes notifications/alerts pages that are populated by a web service based on events that arise in the ERP system is described as follows: DEF Inc. (DEF) provides updates to its suppliers when certain product sales peak, as well as when supplies are required above normal level. For example, one of DEF's products may be bicycles that require sprockets supplied by MMQ company (MMQ). MMQ supplies 1000 sprockets on average to DEF on the 15^{th} of every month. When ABC's bicycle sales peak and manufacturing are running above 100%, MMQ may need to be alerted of a possible increase in requirements. Administrators at DEF can choose the Notifications/Alert template, map the fields and create a mobile application, and publish that mobile application in the MBAPP server. The Notification/Alert tab in the mobile application gets populated with data from ERP as soon as sprockets are depleting above a certain level from the inventory. Suppliers of DEF, such as MMQ, can download the standard mobile application published by the ERP vendor from the appropriate app marketplace based on the mobile phone OS, and later register to MBAPP server as a customer of DEF. Based on events in DEF's ERP server, if there are above average depleting stocks, then the end-user's mobile application is alerted of this information.

A Query Result Page template may be used when a query is sent from the mobile device 170 for information/results from the ERP system 110. In such case, data is pulled by the mobile device 170 from the ERP data backend. An example scenario of using a template that includes a Query Result Page can be described as follows: DEF can provide an instant query response service via a mobile application to its suppliers, whereby suppliers can check the change in inventory levels of the components it supplies to DEF. The mobile application can have a query that allows MMQ to choose a component that it supplies, check its current inventory level and compare it to the inventory levels during the same period of the previous years and months.

In the illustrated example system environment 100, the mobile device 170 includes a processor 115c, a database 130c, an interface 135c, one or more mobile applications 160c, a display 175, and a graphical user interface (GUI) 180 that can be presented on the display. In some implementations, the software and hardware components (e.g., the processor 115c, database 130c, and interface 135c) included in the mobile device 170 may have functionalities that are similar or different in nature to that of their respective counterpart included in the ERP server 110 and/or the MBAPP server 140. In general, the mobile device 170 can include mobile phones, smartphones, and tablet computers, among others.

The display 175 can be any output hardware for presenting information on the mobile device 170 to the end-user (not shown). In some implementations, the information may be presented on the display through a GUI 180. The GUI 180 may be operable to interface with at least one mobile application 160c for any suitable purposes. Generally, through the GUI 180, the end-user is provided with an efficient and user-friendly presentation of data provided by or communicated within the system. The GUI 180 can represent any graphical user interface, including but not limited to, a web browser, touch screen, or command line interface (CLI) that processes information in environment 100 and efficiently presents the information results to the user. In general, the GUI 180 may include a plurality of user interface elements, some or all associated with the mobile applications 160c, such as interactive fields, pull-down lists, and buttons operable by the end-user. These and other user interface elements may be related to or represent the functions of the applications, as well as other software applications executing at the servers 110, 140.

The mobile device 170 may access the MBAPP server 140 via the network 190. When being accessed by the mobile device 170, the MBAPP server 140 may first authenticate the mobile device 170 against the associated ERP customer system user (e.g., the administrator 150). The MBAPP server 140 may request data from the ERP system 110 for the XML template published for the authenticated end-user. The MBAPP server 140 may also send the data received from the ERP system 110 to the mobile device 170. In case of mobile applications 160c configured for alert, the MBAPP server 140 may send the data to the mobile applications 160c on the mobile device 170 based on the event triggered in the ERP system 110 backend.

While FIGURE 1 is described as containing or being associated with a plurality of elements, not all elements illustrated within environment 100 of FIGURE 1 may be utilized in each alternative implementation of the present disclosure. Additionally, one or more of the elements described herein may be located external to environment 100, while in other instances, certain elements may be included within or as a portion of one or more of the other described elements, as well as other elements not described in the illustrated implementation. Further, certain elements illustrated in FIGURE 1 may be combined with other components, as well as used for alternative or additional purposes, in addition to those purposes described herein.

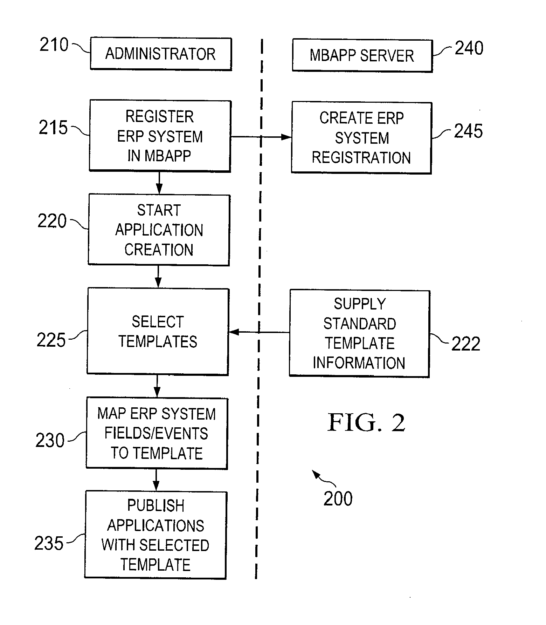

FIGURE 2 is a block diagram showing an example process flow 200 for publishing a mobile application based on an MBAPP. The example process 200 is performed by an administrator 210 and an MBAPP server 240, such as the administrator 150 and the MBAPP server 140 described with regard to FIGURE 1.

The administrator 210 may be an ERP customer administrator or business process administrator. The administrator 210 registers the ERP system in the MBAPP server at 215, such that the templates stored in the MBAPP server 240 may be associated with data sets stored in the ERP system. The association may be managed by web service and/or OData service, as well as a general ERP application. Accordingly, the MBAPP server 240 may know where to retrieve the dynamic content to populate the template in order to publish mobile applications. When the ERP system is registered in the MBAPP server 240, an ERP system registration is created at the MBAPP server 240 at 245. The administrator 210 may start the application creation at 220.

At 222, the MBAPP server 240 can supply the standard template information to the administrator 210. The MBAPP server 240 may have a set of standard templates that the administrator can use. The standard templates may be created and/or published by software partners (e.g., SAP) or their partners or trusted third-party software vendors. At 225, the administrator 210 may select the templates that may be used to publish and display information for the mobile application, based on the standard template information supplied by the MBAPP server 240. The administrator 210 may choose one of the templates supplied by the MBAPP server 240 and map the dynamic content stored in the ERP system to the corresponding fields or events of the templates at 230, based on the types of the templates. At 235, mobile applications/files are published with the selected template by the administrator 210. The published mobile applications may be stored in the database of the MBAPP server 240.

The published application/file may include template information, static content, dynamic content, and the system connectivity information to fix the dynamic content. In some implementations, the MBAPP server 240 may have a logic by which information associated with the template is shown in a standard fashion when the applications are published by the mobile application interpreter (such as element 160b in FIGURE 1). The published application may be standard applications that can consume the templates.

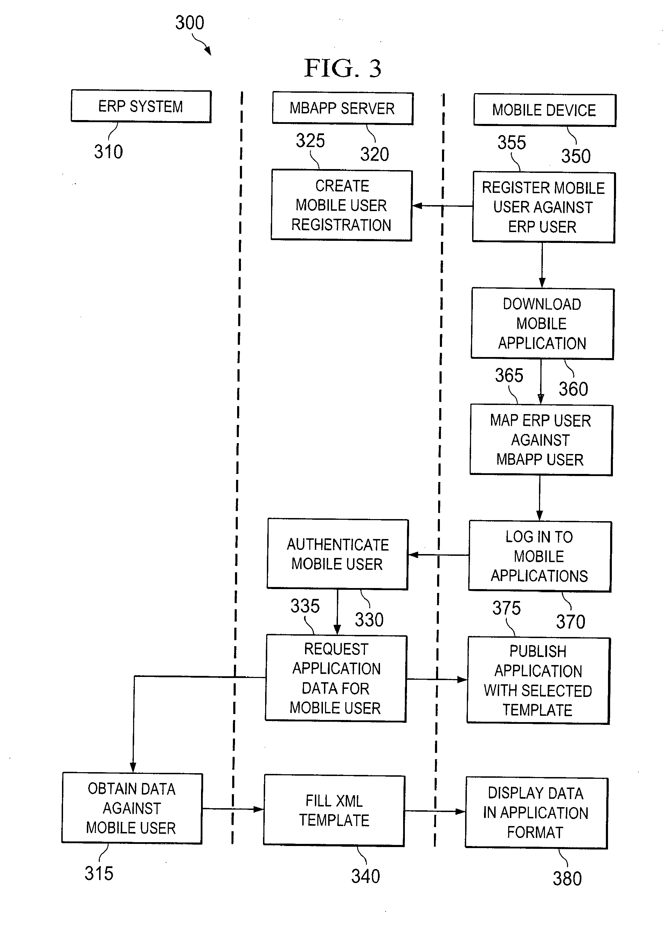

FIGURE 3 is a block diagram showing an example process flow 300 for using a template for publishing mobile applications on a mobile device. The example process flow 300 may be performed in conjunction with the process flow 200 described with regard to FIGURE 2. The example process 300 is performed by an ERP system 310, an MBAPP server 320, and a mobile device 350, such as the ERP system 110, MBAP server 140 and mobile device 170 described with regard to FIGURE 1. The mobile device 350 may be used by a mobile user (or end-user).

At 355, a mobile user may use the mobile device 350 to register against the ERP user. The mobile user may register as an ERP user of the ERP system. The registration request may be sent to the MBAPP server 320. Based on receiving the request from the mobile device 350 for registration, the MBAPP server 320 may create the mobile user registration at 325. After registration, the mobile device 350 may download registered mobile applications published by an ERP customer (such as in 235) at 360 and start using the mobile application. At 365, information of the ERP user is mapped against the MBAPP user. The MBAPP user may be an ERP customer/vendor/administrator. By mapping the ERP user against the MBAPP user, the mobile user as an ERP user can have a user name and password in the MBAPP system 320.

At 370, the mobile user can use the user name and password to log in to the MBAPP system 320. The user name and password will be further mapped onto the MBAPP user's ERP system. As such, when the mobile user logs in, and tries to pull information, the static content included in the template can easily come from the MBAPP server 320. However, in order to obtain the dynamic content, the web service may be executed at the ERP customer's system (i.e., the MBAPP server 320). Therefore, the mobile user is authenticated at 330. This user will be that end-user in the ERP system.

At 335, the application data for the mobile user is requested by the MBAPP server 320. At 375, the mobile application is published with the selected template. Based on receiving the request for application data the data is obtained for the mobile device at 315 based on the mapping between services described in FIGURE 2. At 340, the fields of an XML template are filled based on the data obtained from the ERP system 310. At 380, the data of the template (or templates) is displayed and/or published on the mobile device 350 in the format of a mobile application. In some implementations, the mobile application may be a unified web application that can consume various templates. As such, the mobile user can download one unified application to the mobile device 350, and use the application to perform various functionalities and/or receive services provided by the ERP customers/vendors. Different ERP customers/vendors may enforce different authentication information, and the functionalities the mobile user can perform or the services the mobile user can receive may depend on its authorization from the ERP customers/vendors. Using one unified application may also simplify software update of different applications from different ERP customers/vendors. Instead of updating a variety of applications, one update of the unified application may be performed.

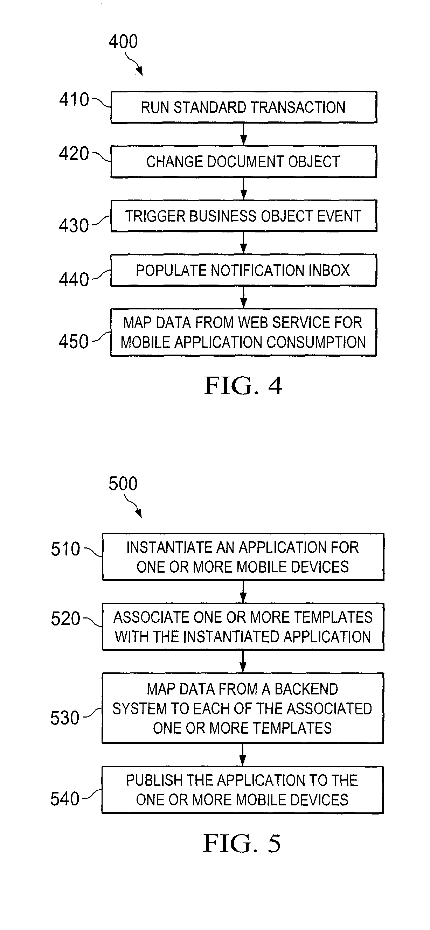

FIGURE 4 is a flowchart showing an example process 400 for setting up a notification/alert template. In some implementations, setting up the notification/alert template may allow a notification/alert to be pushed to a mobile device when an event or change occurs in the ERP backend (e.g., ERP server).

At 410, a standard transaction is run at the ERP backend system. At 420, a document or business object is changed at the ERP backend, and a business object event is triggered at 430. The document object change may be a change of the database table, which can be captured in the ERP system via change logs. The change of document object may further be linked to a business object repository object event. The object event may be triggered by a change of the document object or when the change has reached a certain level. Further, application-based grouping may be created for the change of document object.

At 440, the triggered object events can populate the notification/alerts inbox based on subscription of mobile application users to application notification group. Specific business logic can exist in object events that can trigger data flow from the ERP system to notify/alert the mobile user. The data flow may be an RSS feed pushed into the mobile user's notification inbox. At 450, data from the ERP backend may be mapped from web service for mobile application consumption. In some implementations, a web service can publish information from the notification inbox for external access. The process of mapping data from the web service for mobile application consumption is described with regard to FIGURE 2.

FIGURE 5 is a flowchart showing an example process 500 for publishing mobile applications. At 510, a server (e.g., an MBAPP server) instantiates an application for one or more mobile devices. The application may provide services or perform functionalities that are requested by the one or more mobile devices. At 520, the server associates one or more templates with the instantiated application. The one or more templates may be used to facilitate the publication of the instantiated application. Each of the one or more templates is configurable to provide functionality to the application. At 530, the server maps data from a backend system to each of the associated one or more templates. The mapped data may be dynamic content used to populate the fields of the one or more templates. The backend system may be an ERP system. At 540, the server publishes the application to the one or more mobile devices.

While this specification contains many specific implementation details, these should not be construed as limitations on the scope of any that may be claimed, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described components and systems can generally be integrated together in a single product or packaged into multiple products.

In the present disclosure, "each" refers to each of multiple items or operations in a group, and may include a subset of the items or operations in the group and/or all of the items or operations in the group. In the present disclosure, the term "based on" indicates that an item or operation is based at least in part on one or more other items or operations and may be based exclusively, partially, primarily, secondarily, directly, or indirectly on the one or more other items or operations.

A number of implementations of the present disclosure have been described. Nevertheless, it will be understood that various modifications may be made without departing from the spirit and scope of the present disclosure. Accordingly, other implementations are within the scope of the following claims.

## Claims

1. A computer-implemented method performed by one or more processors for publishing mobile applications, the method comprising:
instantiating an application for one or more mobile devices;
associating one or more templates with the instantiated application, each of the one or more templates configurable to provide a functionality to the application;
mapping data from a backend system to each of the associated one or more templates; and
publishing the application to the one or more mobile devices.

2. The method of claim 1, further comprising:
authenticating the one or more mobile devices,
requesting data to be published to the one or more mobile devices when the one or more mobile devices are authenticated,
publishing the requested data on the application of the one or more mobile devices when the one or more mobile devices are authenticated, and
sending the data to the application of the one or more mobile devices based on an event triggered in the backend system when the application is configured for alert and the one or more mobile devices are authenticated.

3. The method of claim 1 or 2, wherein the one or more templates include information defining a visual format for the application.

4. The method of any one of the preceding claims, wherein the one or more templates include at least one of:
a hypertext markup language (HTML) page with mapped fields from a system web service,
a notification page that is populated by a web service based on events that are triggered in the backend system, and
a query response page that can execute a web service or OData service.

5. The method of any one of the preceding claims, wherein the one or more templates are retrieved from a mobile business application publishing platform (MBAPP) system.

6. The method of any one of the preceding claims, wherein a portion of the one or more templates comprises a set of pre-defined functionality and information defining a user interface design associated with at least one operation.

7. The method of any one of the preceding claims, further comprises populating the one or more templates with the mapped data from the backend system.

8. The method of any one of the preceding claims, wherein the backend system is an enterprise resource planning (ERP) system.

9. A computer program product for test automation management, the computer program product comprising computer-readable instructions embodied on tangible, non-transient media and operable when executed to perform a method according to any one of the preceding claims.

10. A computer-implemented method performed by one or more processors for publishing mobile applications, the method comprising:
receiving a request from an instance of an application;
authenticating a mobile device associated with the application;
retrieving backend data associated with the authenticated mobile device;
performing a template functionality associated with the instance of the application; and
sending a result of the performed template functionality to the instance of the application.

11. The method of claim 10, wherein the backend data is retrieved from an enterprise resource planning (ERP) system.

12. A computer program product for test automation management, the computer program product comprising computer-readable instructions embodied on tangible, non-transient media and operable when executed to perform the method of claim 10 or 11.
